# EUROPÄISCHE PATENTSCHRIFT

(11) **EP 0 587 926 B1**
(45) Veröffentlichungstag und Bekanntmachung des Hinweises auf die Patenterteilung: **24.07.1996**
(21) Anmeldenummer: 92115717.8
(22) Anmeldetag: 14.09.1992
(51) Int. Cl.: G21C 3/10, B23K 11/30

(54) **Brennstab für einen Kernreaktor und Schweissvorrichtung zu dessen Herstellen**
Fuel rod for nuclear reactor and welding device for its manufacture
Crayon combustible pour réacteur nucléaire et appareil de soudage pour sa fabrication

(43) Veröffentlichungstag der Anmeldung: 23.03.1994
(73) Patentinhaber: SIEMENS AKTIENGESELLSCHAFT, 80333 München (DE)
(72) Erfinder: Credé, Dieter, W-8752 Klein Ostheim (DE); Schleich, Rainer, W-6450 Hanau (DE)

(56) Entgegenhaltungen:
- EP-A- 0 344 528
- GB-A- 1 419 838
- US-A- 3 959 058
- PATENT ABSTRACTS OF JAPAN vol. 13, no. 436 (P-938)(3784) 29. September 1989 ; & JP-A-01 165 988
- PATENT ABSTRACTS OF JAPAN vol. 14, no. 445 (P-1110) 25. September 1990 ; & JP-A-02 176 598

## Beschreibung

Die Erfindung betrifft einen Brennstab entsprechend dem Oberbegriff des Patentanspruchs 1 und eine Schweißvorrichtung zum Herstellen dieses Brennstabs.

Ein solcher Brennstab ist bereits üblich. Sein Ringwulst hat einen scharfen ringförmigen Grad, d.h. der Querschnitt des Ringwulsts bildet ein spitzwinkliges Dreieck mit einem spitzen Winkel, der sich am ringförmigen Grad befindet.

Aus GB-A-1 419 838 ist ein Verfahren zum Verschweißen eines Hüllrohrs mit einem Verschlußstopfen bekannt, wobei der Verschlußstopfen eine Rippe aufweist, die als Verstärkung des Schweißwahtes dient.

Ein solcher Brennstab kann in einer Schweißvorrichtung hergestellt werden mit einer Elektrode, in der sich eine Bohrung zur Aufnahme eines Hüllrohrendes befindet. Diese Bohrung ist an einem Bohrungsende, das einer relativ zu dieser Elektrode verschiebbaren, zum Halten des Verschlußstopfens bestimmten Gegenelektrode zugewandt ist, unter Ausbildung eines kegelstumpfförmigen, sich nach innen verjüngenden Hohlraums angefast. Der kegelstumpförmige Hohlraum bestimmt die Form des sich beim Festschweißen des Verschlußstopfens am Hüllrohr ausbildenden Ringwulsts aus erstarrter Schweißschmelze.

Die Schweißverbindung zwischen Hüllrohr und Verschlußstopfen gilt als einwandfrei, wenn der kegelstumpfförmige Hohlraum der Elektrode für das Hüllrohr beim Schweißen bis zu einem bestimmten, durch Versuche ermittelbaren Umfang mit Werkstoff des Hüllrohrs und des Verschlußstopfens aufgefüllt wird. Nach dem Schweißen kann durch Messen der Höhe des Grads des Ringwulsts an der Schweißstelle zwischen Verschlußstopfen und Hüllrohr des Brennstabs die Qualität dieser Schweißstelle festgestellt werden.

Zum Herstellen von Kernreaktorbrennelementen, die in einem Kernreaktor einsetzbar sind, müssen die Brennstäbe in die Maschen von in der Regel gitterförmigen Abstandhaltern eingefädelt werden. Hierbei ist der Ringwulst an der Schweißstelle zwischen Hüllrohr und Verschlußstopfen der einzelnen Brennstäbe hinderlich. Deshalb werden diese Ringwulste nach dem Ausmessen und Feststellen der Qualität der Schweißstelle mechanisch abgearbeitet, z.B. abgefräst, bis davon ausgegangen werden kann, daß sie das Einfädeln der Brennstäbe in die Abstandhalter nicht mehr behindern.

Bei diesem mechanischen Abarbeiten kann es zur Beschädigung des Hüllrohrs kommen, durch die ein Brennstab Ausschuß wird. Der Erfindung liegt die Aufgabe zugrunde, den Arbeitsgang des mechanischen Abarbeitens zu eliminieren.

Zur Lösung dieser Aufgabe hat ein Brennstab der eingangs erwähnten Art erfindungsgemäß die Merkmale des kennzeichnenden Teils des Patentanspruchs 1.

Der Außendurchmesser der zylinderförmigen Mantelfläche des Ringwulsts kann von vornherein so gewählt sein, daß ein Einfädeln des betreffenden Brennstabs in Zellen von Abstandhaltern ohne mechanische Nachbearbeitung des Ringwulsts möglich ist. Andererseits kann eine Aussage über die Qualität der Schweißverbindung zwischen Hüllrohr und Verschlußstopfen des betreffenden Brennstabes aufgrund des relativen Vorschubs zwischen der Elektrode mit dem Hüllrohr und der Gegenelektrode mit dem Verschlußstopfen beim Verschweißen dieser Teile miteinander getroffen werden.

Mit einer Schweißvorrichtung entsprechend Patentanspruch 7 kann ein erfindungsgemäßer Brennstab einfach und kostengünstig hergestellt werden.

Aus GB-A-1 419 838 ist zwar ein Verschlußstopfen bekannt, der außen an seinem Schweißende einen Ringwulst aufweist, dieser Ringwulst ist aber bereits vor dem Anschweißen der Verschlußstopfens an ein Hüllrohr vorhanden. Die Anlageflächen von Verschlußstopfen und Hüllrohr sind angefaßt, so daß sich kein Ringwulst aus einer wieder erstarrten Schweißschmelze mit zylinderförmiger äußerer Mantelfläche ergibt.

Die Erfindung und ihre Vorteile seien anhand der Zeichnung an einem Ausführungsbeispiel näher erläutert:

Figur 1 zeigt im Längsschnitt eine erfindungsgemäße Schweißvorrichtung zum Verschweißen von Hüllrohr und Verschlußstopfen eines erfindungsgemäßen Brennstabs.

Figur 2 zeigt im Längsschnitt den mit dem Hüllrohr verschweißten Verschlußstopfen des Brennstabs nach der Erfindung.

Figur 3 zeigt ein Schliffbild zum Längsschnitt nach Figur 2.

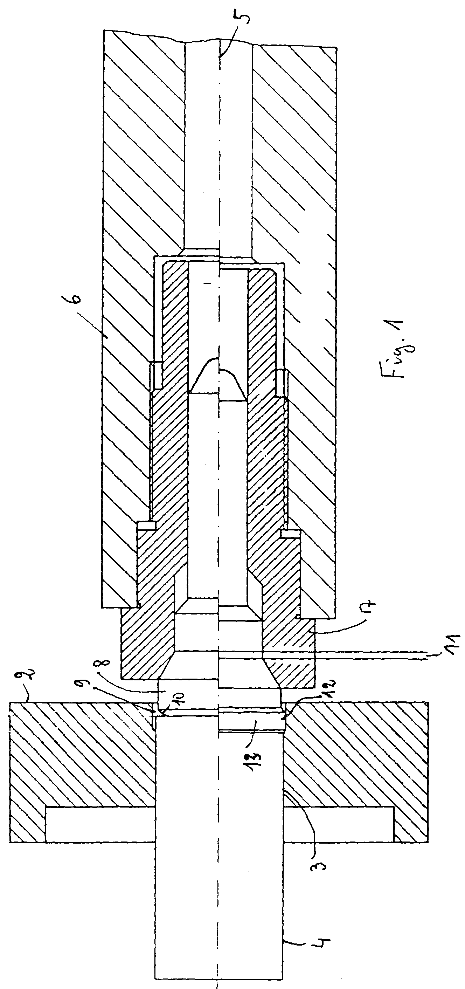

Die Schweißvorrichtung nach Figur 1 zeigt eine aus zwei gleich ausgebildeten Hälften zusammengesetzte Kupferelektrode 2 mit einer Durchgangsbohrung 3, in der sich ein mit Kernbrennstoff gefülltes Hüllrohr 4 aus einer Zirkoniumlegierung eines Brennstabes befindet. Die beiden gleich ausgebildeten Teile der KuDferelektrode 2 umschließen das in der Durchgangsbohrung 3 befindliche Hüllrohr 4 und berühren die äußere Oberfläche dieses Hüllrohrs 4 großflächig.

Ferner ist ein relativ zur Kupferelektrode 2 in Richtung der Längsachse 5 des Hüllrchrs 4 verschiebbarer Trägerkörper 6 für eine Gegenelektrode vorgesehen, die aus einer zum Hüllrohr 4 und damit zur Durchführung 3 in der Kupferelektrode 2 koaxial angeordneten Kupferhülse 7 besteht. In diese Kupferhülse 7 ist ein Verschlußstopfen 8 ebenfalls aus einer Zirkoniumlegierung für den Brennstab lose eingesetzt.

Die Durchgangsbohrung 3 ist an ihrem der Kupferhülse 7 zugewandten Ende mit einer zylinderförmigen Abstufung 9 versehen mit einem Durchmesser größer als dem Bohrungsdurchmesser der Durchgangsbohrung 3. In diese Abstufung 9, die einen zylinderförmigen Hohlraum bildet, ragt an einem Ende das Ende des Hüllrohrs 4 und am anderen Ende das Ende des Verschlußstopfens 8 hinein.

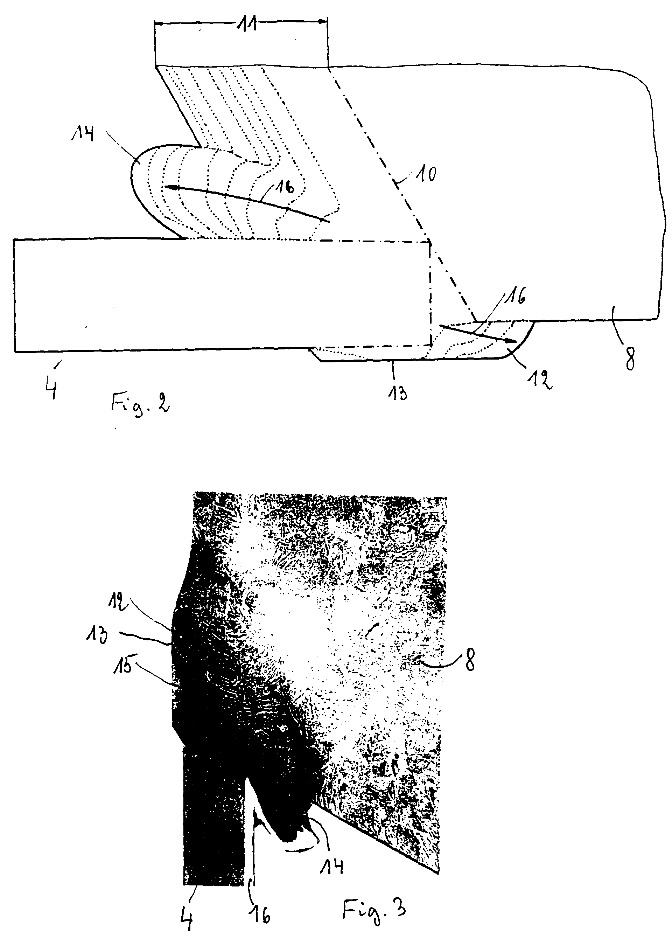

In Figur 2 geben strichpunktierte Linien die ursprüngliche Form von Hüllrohr 4 und Verschlußstopfen 8 wieder. Der Verschlußstopfen 8 bildet in seiner ursprünglichen Form an der Stirnfläche einen Außenkonus 10, der sich zur Längsachse 5 des Hüllrohrs und damit auch zu der in diese Längsachse 5 fallende Längsachse des Verschlußstopfens 8 hin verjüngt. Ein Ende des Hüllrohrs 4 liegt mit seiner Innenkante am Konus 10 an.

Zum Verschweißen des Hüllrohrs 4 mit dem Verschlußstopfen 8 wird eine elektrische Stromquelle an die Kupferelektrode 2 und an die Kupferhülse 7 angeschlossen. Zugleich wird mit dem Trägerkörper 6 der Verschlußstopfen 8 gegen das Hüllrohr 4 gepreßt und der Werkstoff an der Berührungsstelle von Verschlußstopfen 8 und Hüllrohr 4 um den Vorschub 11 (Stauchweg) gestaucht.

Während in Figur 1 oberhalb der strichpunktierten Längsachse 5 des Hüllrohrs 4 der Anfangszustand von Hüllrohr 4 und Verschlußstopfen 8 zu Beginn des Schweißvorgangs dargestellt ist, ist unterhalb dieser Längsachse 5 der Endzustand nach Beendigung des Schweißvorgangs und Abschalten der Kupferelektrode 2 und der Kupferhülse 7 von der Stromquelle erkennbar.

Wie Figur 2 zeigt, greift in diesem Endzustand der Verschlußstopfen 8 in das Hüllrohr 4, und an der Übergangsstelle zwischen Hüllrohr 4 und Verschlußstopfen 8 ist an der Außenoberfläche des Hüllrohrs 4 ein Ringwulst 12 mit einer zylinderförmigen äußeren Mantelfläche 13 vorhanden. Innerhalb des Hüllrohrs 4 ist eine ringförmige Werkstoffauspressung 14 ausgebildet. Sowohl Ringwulst 12 als auch die Werkstoffauspressung 14 sind aus dem Werkstoff des ursprünglichen Hüllrohrs und des ursprünglichen Verschlußstopfens, im vorliegenden Fall aus Zirkoniumlegierung zusammengesetzt.

Infolge der beiden Fugen, die sich zwischen den beiden Teilen der Kupferelektrode 2 befinden, können sich auf der äußeren Mantelfläche 13 des Ringwulsts 12 zwei Überhöhungen befinden, die in Figur 2 nicht erkennbar sind und von denen sich jede längs einer Mantellinie der Mantelfläche 13 erstreckt.

Nicht nur der Ringwulst 12, sondern auch die Werkstoffauspressung 14 sind aus einer Schweißschmelze wieder erstarrt und haben die in Figur 3 dargestellte Gefügestruktur. Der Fluß des Werkstoffs durch das Schweißen ist mit den Pfeilen 16 angedeutet.

Wie Figur 3 entnommen werden kann, befindet sich in der zylinderförmigen Mantelfläche 13 des Ringwulsts 12 eine in bezug auf die Längsachse 5 des Hüllrohrs 4 umlaufende Mulde 15. Diese Mulde 15 enthält den Werkstoff, d.h. die Zirkoniumlegierung des Hüllrohrs 4 mit dem gleichen Gefüge wie im Hüllrohr 4.

Innen am Hüllrohr 4 ist ein Innenüberzug 16 aus hochreinem Zirkonium erkennbar. Dieser korrosionsempfindliche Überzug setzt sich auf der Oberfläche der Werkstoffauspressung 14 fort und ist nicht in das aus der Schweißschmelze erstarrte Material und damit auch nicht nach außen vorgedrungen.

Die zylinderförmige äußere Mantelfläche 13 des Ringwulsts 12 kann mechanisch unbearbeitet bleiben. Dadurch werden nicht nur Fertigungskosten eingespart, sondern auch eine Beschädigung des Hüllrohrs 4 am Ringwulst 12 vermieden. Ferner werden Bearbeitungsspäne vermieden, die sich im Falle einer Zirkoniumlegierung sogar sehr leicht selbst entzünden könnten.

## Patentansprüche

1. Brennstab für einen Kernreaktor mit einem aus Metall bestehenden Hüllrohr (4), das mit Kernbrennstoff gefüllt und einen an einem Rohrende angeschweißten Verschlußstopfen (8) aus Metall, insbesondere aus dem gleichen Metall, sowie an der Außenoberfläche des Hüllrohrs (4) an der Übergangsstelle zwischen Hüllrohr (4) und Verschlußstopfen (8) einen Ringwulst (12) aufweist,
**dadurch gekennzeichnet**,
daß der Ringwulst (12) aus einer Schweißschmelze wieder erstarrt ist und eine zylinderförmige äußere Mantelfläche (13) mit zur Längsachse (5) des Hüllrohrs (4) im wesentlichen Darallelen Mantellinien hat.

2. Brennstab nach Anspruch 1,
**dadurch gekennzeichnet**, daß der Ringwulst (12) auf der zylinderförmigen äußeren Mantelfläche (13) mindestens zwei Überhöhungen aufweist, von denen sich jede längs einer Mantellinie der Mantelfläche (13) erstreckt.

3. Brennstab nach Anspruch 1,
**dadurch gekennzeichnet**, daß der Werkstoff des Ringwulsts (12) aus dem Metall des Hüllrohrs (4) und des Verschlußstopfens (8) zusammengesetzt ist.

4. Brennstab nach Anspruch 1,
**dadurch gekennzeichnet**, daß die zylinderförmige äußere Mantelfläche (13) des Ringwulsts (12) mechanisch unbearbeitet ist.

5. Brennstab nach Anspruch 1,
**dadurch gekennzeichnet**, daß sich in der zylinderförmigen äußeren Mantelfläche (13) des Ringwulsts (12) eine umlaufende Mulde (15) im Ringwulst (12) befindet, die den Werkstoff des Hüllrohrs (4) mit dem gleichen Gefüge wie im Hüllrohr (4) enthält.

6. Schweißvorrichtung zum Herstellen eines Brennstabs nach einem der Patentansprüche 1 bis 5 mit einer Elektrode (2), in der sich eine Durchgangsbohrung (3) zur Aufnahme eines Endes eines Hüllrohrs (4) befindet, sowie mit einem Ende der Durchgangsbohrung (3), das einer relativ zur Elektrode (2) verschiebbaren, zum Halten des Verschlußstopfens (8) bestimmten Gegenelektrode (7) zugewandt ist und das eine zylinderförmige Abstufung (9) mit einem Durchmesser größer als der Durchmesser der Durchgangsbohrung (3) aufweist.

## Claims

1. Fuel rod for a nuclear reactor, having a cladding tube (4) which is made of metal and filled with nuclear fuel and has welded on one tube end a sealing plug (8) made of metal, in particular made of the same metal, and also has on the external surface of the cladding tube (4), at the transition point between the cladding tube (4) and the sealing plug (8), an annular bead (12), characterised in that the annular bead (12) is re-solidified from a welding melt and has a cylindrical external casing surface (13) having casing lines which are substantially parallel to the longitudinal axis (5) of the cladding tube (4).

2. Fuel rod according to claim 1, characterised in that on the cylindrical external casing surface (13), the annular bead (12) has at least two humps, each of which extends along a casing line of the casing surface (13).

3. Fuel rod according to claim 1, characterised in that the material of the annular bead (12) is made of the metal of the cladding tube (4) and of the sealing plug (8).

4. Fuel rod according to claim 1, characterised in that the cylindrical external casing surface (13) of the annular bead (12) is mechanically unworked.

5. Fuel rod according to claim 1, characterised in that in the cylindrical external casing surface (13) of the annular bead (12), there is a circumferential hollow (15) in the annular bead (12), which hollow contains the material of the cladding tube (4), which material has the same structure as in the cladding tube (4).

6. Welding apparatus for producing a fuel rod according to one of the claims 1 to 5, having an electrode (2) in which there is a through-bore (3) for receiving one end of a cladding tube (4), and also having one end of the through-bore (3), which end faces a counter electrode (7) which is displaceable relative to the electrode (2) and is intended for holding the sealing plug (8), and which end has a cylindrical step (9), the diameter of which is larger than the diameter of the through-bore (3).

## Revendications

1. Crayon combustible pour un réacteur nucléaire comportant une gaine (4) métallique, remplie de combustible nucléaire et un bouchon (8) de fermeture métallique soudé à une extrémité de la gaine, la gaine et le bouchon pouvant notamment être en le même métal, ainsi qu'un bourrelet (12) annulaire sur la surface extérieure de la gaine (4) à la transition entre la gaine (4) et le bouchon (8) de fermeture, caractérisé en ce que le bourrelet (12) annulaire est resolidifié d'une masse fondue de soudure et a une surface (13) latérale extérieure en forme de cylindre comportant des génératrices sensiblement parallèles à l'axe (5) longitudinal de la gaine (4).

2. Crayon combustible suivant la revendication 1, caractérisé en ce que le bourrelet (12) annulaire comporte sur la surface (13) latérale extérieure en forme de cylindre au moins deux surélévations, chacune d'entre elles s'étendant le long d'une génératrice de la surface (13) latérale.

3. Crayon combustible suivant la revendication 1, caractérisé en ce que le matériau du bourrelet (12) annulaire est composé du métal de la gaine (1) et de celui du bouchon (8) de fermeture.

4. Crayon combustible suivant la revendication 1, caractérisé en ce que la surface (13) latérale extérieure en forme de cylindre du bourrelet annulaire n'est pas usinée mécaniquement.

5. Crayon combustible suivant la revendication 1, caractérisé en ce qu'une cuvette (15) faisant le tour du bourrelet (12) annulaire, laquelle comporte le matériau de la gaine (4) de même constitution que dans la gaine (4), se trouve dans la surface (13) latérale extérieure en forme de cylindre du bourrelet (12) annulaire.

6. Dispositif de soudage pour la fabrication d'un crayon combustible suivant l'une des revendications 1 à 5, comportant une électrode (2), dans laquelle se trouve un trou (3) de passage pour la réception d'une extrémité d'une gaine (4), ainsi qu'une extrémité du trou (3) de passage, qui est tournée vers une électrode antagoniste (7), qui peut coulisser par rapport à l'électrode (2), qui est destinée à maintenir le bouchon (8) de fermeture et qui comporte un épaulement (9) de forme cylindrique de diamètre supérieur au diamètre du trou (3) de passage.
